# EUROPEAN PATENT APPLICATION

(11) **EP 4 592 603 A1**
(43) Date of publication of application: **30.07.2025**
(21) Application number: 24153540.0
(22) Date of filing: 23.01.2024
(51) Int. Cl.: F24D 19/10, G05D 23/19

(54) **AN ELECTRONIC THERMOSTATIC RADIATOR VALVE AND A METHOD OF DETERMINING A NO FLOW POSITION OF A RADIATOR VALVE BODY**

(71) Applicant: ADEMCO 1 LIMITED, Oldham OL9 9XA (GB)
(72) Inventor: HURST, Andrew, Winnersh Triangle, RG41 5RD (GB)
(74) Representative: Murgitroyd & Company

(57) **Abstract**

In a domestic heating system, an electronic thermostatic radiator valve (eTRV) may be retrofittable to an existing radiator valve body. However, there is no exact standard for radiator valve bodies and some physical and operational differences are present. The eTRV therefore requires calibration. During calibration, a typical eTRV closes the valve until the motor stalls which results in a greater than desired compression of the rubber seat. Accordingly, each time the eTRV moves the valve to the closed position during operation, the rubber seat is compressed beyond the desired position, resulting in a reduced lifetime of the valve. The present invention provides an eTRV (200) including a temperature sensor (260) arranged and configured to measure a temperature of the radiator valve body (100). The eTRV (200) is operable to determine a no flow position between the typical open and closed positions. In use, the eTRV (200) may therefore use the no flow position instead of the typical closed position to reduce wear on the rubber seat of the valve.

## Description

### Field of the Disclosure

The present disclosure relates generally to an electronic thermostatic radiator valve (eTRV) and finds particular, although not exclusive, utility in providing an eTRV that is able to identify the eTRV positions at which no flow and full flow occurs through the TRV body.

### Background

A typical domestic heating system may include a heat source, such as a boiler or heat pump, and one or more radiators. The heat source heats a heating fluid, such as water, and the heating fluid is pumped to the one or more radiators. The heating fluid is able to pass through the radiators, where heat from the heating fluid is transferred into the room in which the radiator is positioned, before returning to the heat source to again be heated.

To control the temperature of the room in which the radiator is located, a valve is typically provided at the inlet and/or outlet of the radiator. The valve is operable to restrict the flow of heating fluid in to, or out of, the radiator to restrict the amount of heat energy provided to the room in which the radiator is located.

In some installations, the valve may be a thermostatic radiator valve (TRV). A user may set the TRV to a desired temperature setting, which corresponds to the desired temperature of the room. The TRV is able to react to the ambient temperature of the room in which the radiator is located, and adjust the valve position to alter the possible flow through the radiator in order to adjust the heat output of the radiator accordingly. For example, if the room temperature is below that set on the TRV, the TRV may react by opening the valve to a greater extent to allow a greater flow of heating fluid through the radiator. Alternatively, if the room temperature is above that set on the TRV, the TRV may react by closing the valve to a greater extent, or fully, to reduce or prohibit flow of heating fluid through the radiator.

Typical TRVs rely upon a wax or fluid component that is configured to expand and contract with changes in ambient temperature, and push and/or pull an operating pin of the radiator valve to adjust the valve position. The accuracy and reliability of the temperature control may be improved by using an electronic thermostatic radiator valve (eTRV). An eTRV typically uses an electronic temperature sensor to accurately measure ambient room temperature, and a motor to adjust the position of the valve.

An eTRV may be retrofittable to an existing radiator valve body. However, there is no exact standard for radiator valve bodies and some physical and operational differences are present. For example, the valve stroke, which is the distance the operating pin moves between a fully open and fully closed position, may differ significantly. Therefore, when an eTRV is installed on an unknown radiator valve body, the eTRV may be calibrated. Typically, the operating pin is closed with the motor until the motor stalls. The stalling of the motor indicates that the valve is fully closed. However, as the valve is closed, it typically presses against a rubber seat. During calibration, the eTRV closes the valve until the motor stalls which results in a greater than desired compression of the rubber seat. Accordingly, each time the eTRV moves the valve to the closed position during operation, the rubber seat is compressed beyond the no flow position is reached.

Accordingly, it is desirable to provide an eTRV that is able to determine a no flow position of the valve, wherein flow is prevented. Aspects of the present disclosure provide such an eTRV.

### Summary

According to a first aspect, there is provided an electronic thermostatic radiator valve, eTRV, comprising: a housing configured to be attachable to a radiator valve body of a radiator; a temperature sensor arranged and configured to measure a temperature of the radiator valve body; a motor connected to a valve operating pin of the radiator valve body and configured to actuate the valve operating pin between a closed position and an open position; a processor in communication with the temperature sensor and the motor; and a power source configured to provide power to the temperature sensor, the motor and the processor; wherein the processor is configured to: move, with the motor, the valve operating pin to the open position; determine, with the temperature sensor, an increase in temperature of the radiator valve body; determine a full open delay time, wherein the full open delay time is equal to or longer than a length of time between moving the valve operating pin to the open position and measuring the increase in temperature of the radiator valve body; move, with the motor, the valve operating pin to a first intermediate position between the open position and the closed position; determine, after waiting the full open delay time and with the temperature sensor, that no increase in temperature of the radiator valve body occurred; and assign the first intermediate position as a no flow position.

As discussed in more detail bellow, during successive opening actions the intermediate opening position may be refined until the first position is determined where flow, indicated by a temperature increase is detected. The previous no temperature increase position is the position of the valve at which no flow through the valve is determined. During operation of the eTRV, the valve may be moved to the no flow position to close the valve and prevent flow through the valve. Moving the valve to the no flow position, instead of the closed position, and improves the control of the TRV.

The housing being configured to be attachable to a radiator valve body of a radiator may mean that the housing and/or radiator valve body include attachment means configured to allow the housing to attach to the radiator valve body. The housing may be configured to cover and receive the operating pin therein.

The operating pin may be configured to translate between the open and closed positions. Alternatively, the operating pin and be configured to rotate and translate, in a screwing motion, between the open and closed positions.

The temperature sensor being arranged and configured to measure a temperature of the radiator valve body may mean that the temperature sensor is configured to provide an output that corresponds to a temperature of the radiator valve body. The temperature of the radiator valve body will typically increase as relatively warm heating fluid passes through the radiator valve body. Accordingly, an increase in temperature of the radiator valve body is indicative of a flow of relatively warm heating fluid through the radiator valve body.

The motor may be a positional motor, such as a stepper motor, that is able to accurately move to a desired position. A current position of the motor may be known or determinable. The motor being connected to the valve operating pin of the radiator valve body and configured to actuate the valve operating pin may mean that the motor directly impinges on the valve operating pin, or indirectly causes movement of the valve operating pin. In some examples, the motor may move a plunger which pushes down on the valve operating pin. The plunger may be attachable to the valve operating pin such that retracting of the plunger by the motor directly pulls the valve operating pin. Alternatively, the valve operating pin may be urged, by a spring or other biasing means, from the closed position to the open position such that retraction of the plunger allows the pin to move towards the open position.

The processor may be configured to determine the closed position by moving, with the motor, the valve operating pin towards the closed position until the motor stalls. The stalling of the motor may indicate that the valve is pressed firmly against the valve seating. The processor may be configured to set the open position at a predetermined distance from the closed position. The predetermined distance may be based on an assumed stroke length of the valve operating pin. The assumed stroke length may be based on an average or greatest known stroke length for typical radiator valve bodies.

The processor may be a local processor, or a distributed processor including a local subprocessor. The processor being in communication with the temperature sensor and the motor may mean that the processor is hardwired to the temperature sensor and/or the motor, or that the processor is able to communicate wirelessly with the temperature sensor and/or the motor.

The power source may comprise a battery, a rechargeable battery, a replaceable battery, a capacitor, and/or mains power.

To determine the full open delay time, the processor may multiply the length of time between moving the valve operating pin to the open position and measuring the increase in temperature of the radiator valve body by a factor of 1.1, 1.2, 1.3, 1.4, 1.5, or any other desired factor. The factor may be user adjustable. In this regard, the eTRV may comprise a receiver.

The housing may be configured to define a cavity adjacent to and in fluid communication with the radiator valve body. Accordingly, an air pocket in fluid communication with the radiator valve body may be provided. A temperature of the air within the cavity may be dependent on the temperature of the radiator valve body. The temperature sensor may be configured to measure an air temperature within the cavity. In this way, the eTRV may be fittable to radiator valve bodies having various sizes, shapes and arrangements. There may be no need for the eTRV to be arranged such that the temperature sensor is in contact with the radiator valve body or otherwise directly measure the temperature of the radiator valve body. The cavity may be sealed. Air flow into and out of the cavity may be restricted to ensure that the air heated by the radiator valve body remains adjacent to the temperature sensor.

In some examples, the temperature sensor may be configured to directly measure the temperature of the radiator valve body. The temperature sensor may be arranged to measure a temperature of the valve operating pin or a body of the radiator valve. In this way, the temperature of the radiator valve body may be determined relatively quickly and accurately.

The processor may be further configured to: move, with the motor, the valve operating pin to a second intermediate position, wherein the second intermediate position is between the open position and the first intermediate position; and determine, after waiting the full open delay time and with the temperature sensor, an increase in temperature of the radiator valve body occurred. In this way, the processor may determine that there is a flow through the radiator valve at the second intermediate position. The second intermediate position may therefore not be considered a no flow position. The second intermediate position may be considered to be an open or a partially open position.

The processor may be configured to move the valve operating pin to the first intermediate position prior to moving the valve operating pin to the second intermediate position. Accordingly, the processor may determine the no flow position at the first intermediate position, before opening the valve to the second intermediate position and determining a flow at the second intermediate position.

Prior to moving the valve operating pin to the first intermediate position, the processor may be configured to: iteratively move the valve operating pin to further intermediate positions between the closed position and the first intermediate position; and determine, after waiting the full open delay time at each of the further intermediate positions and with the temperature sensor, that no increase in temperature of the radiator valve body occurred. In this way, the processor may be configured to iteratively open the valve from the closed position towards the open position until a flow is detected. The iterative position immediately prior to the position at which a flow is detected may be determined to be the no flow position.

The processor may be configured to iteratively move the valve operating pin to the further intermediate positions in a sequential order from the closed position towards the second intermediate position. Alternatively, the processor may be configured to iteratively move the valve operating pin to the further intermediate positions in a different, non-sequential, order. A size of the iterative steps between adjacent intermediate positions may be equal or unequal. For example, if the closed position is considered to be a 0% position and the open position is considered to be a 100% position, the processor may be configured to move the valve operating pin in equal increments, such as to a 10% position, a 20% position, a 30% position, etc. until a flow is determined. Alternatively, the processor may be configured to move the valve operating pin in unequal increments, such as to a 10% position, a 20% position, a 25% position, a 30% position, etc. until a flow is determined. For example, a flow may be determined at the 30% position. The previous incremental position, such as the 20% position, may therefore be set as the no flow position and, in use, the eTRV would move the valve operating pin to the 20% position in order to prevent flow through the radiator valve body.

The first intermediate position is the no flow position. The second intermediate position is the closest position to the first intermediate position at which a flow is determined. Once the first intermediate position and second intermediate position are identified, the processor may be configured to iteratively move the valve operating pin to a plurality of intermediate sub-positions between the first intermediate position and the second intermediate position. Accordingly, the no flow position may be fine tuned. For example, the first intermediate position may be the 20% position and the second intermediate position may be the 30% position. The processor may iteratively move the valve operating pin from the 20% position to the 30% position until a flow is determined. The processor may move the valve operating pin to a 21% position, a 22% position, etc., until a flow is determined. For example, no flow may be determined at the 21% position but a flow may be determined at the 22% position. The 21% position may therefore be set as the no flow position. As an alternative example, the processor may move the valve operating pin to a 29% position, a 28% position, etc., until no flow is determined. The processor may iteratively move the valve operating pin to the plurality of sub-positions in any order and with any size of incremental step, as discussed herein with reference to the plurality of intermediate positions. A distance between each intermediate position may be greater than a distance between each intermediate sub-position.

The processor may be configured to move the valve operating pin to the second intermediate position prior to moving the valve operating pin to the first intermediate position. Accordingly, the processor may determine a flow position at the second intermediate position, before closing the valve to the first intermediate position and determining that no flow occurs at the first intermediate position.

Prior to moving the valve operating pin to the second intermediate position, the processor may be configured to: iteratively move the valve operating pin to further intermediate positions between the open position and the second intermediate position; and determine, after waiting the full open delay time at each of the further intermediate positions and with the temperature sensor, that an increase in temperature of the radiator valve body occurred. In this way, the processor may be configured to iteratively close the valve from the open position towards the closed position until no flow is detected. The iterative position at which no flow is detected may be determined to be the no flow position.

The processor may be configured to iteratively move the valve operating pin to the further intermediate positions in a sequential order from the open position towards the first intermediate position. Alternatively, the processor may be configured to iteratively move the valve operating pin to the further intermediate positions in a different, non-sequential, order.

A size of the iterative steps between adjacent intermediate positions may be equal or unequal. For example, if the closed position is considered to be a 0% position and the open position is considered to be a 100% position, the processor may be configured to move the valve operating pin in equal increments, such as to a 90% position, an 80% position, a 70% position, etc. until a flow is determined. Alternatively, the processor may be configured to move the valve operating pin in unequal increments, such as to a 75% position, a 60% position, a 50% position, a 35% position, etc. until a flow is determined. For example, a flow may be determined at a 30% position. No flow may be determined at the following incremental position, such as the 20% position. Accordingly, the 20% position may therefore be set as the no flow position and, in use, the eTRV would move the valve operating pin to the 20% position in order to prevent flow through the radiator valve body.

Once the first intermediate position and second intermediate position are identified, the processor may be configured to iteratively move the valve operating pin to a plurality of intermediate sub-positions between the first intermediate position and the second intermediate position as previously discussed herein.

The eTRV may further comprise a transmitter operable, in use, to send a heat demand signal to a heat source associated with the radiator. The heat demand signal may instruct the heat source to begin heating the heating fluid and provide the relatively warm heating fluid to the radiator. The processor may be in communication with the transmitter. The processor and transmitter may be wired or communicate wirelessly. The power source may be configured to provide power to the transmitter. The processor may be configured to move, with the motor, the valve operating pin to the open position when the heat demand signal is sent to the heat source. In this way, the open delay time may be accurately determined. In alternative examples, the eTRV may not, or may not be able to, send heat demand signals to the heat source. The operation of the heat source may be controlled by an alternative controller.

The processor may be configured to determine a fault. A fault may indicate that the radiator valve is not performing or operating as expected. If a fault is determined, the processor may be configured to send, with the transmitter, a fault message to a user device. The user device may be, for example, a home hub device or a smartphone. The fault message may indicate the determination of at least one of: no increase in temperature of the radiator valve body occurring after waiting the full open delay time with the valve operating pin in the open position; and an increase in temperature of the radiator valve body occurring with the valve operating pin in the closed position. The open position is typically calculated with an assumed stroke length from the closed position. In some circumstances, for example with a radiator valve with a particularly long stroke length or a particularly compressible valve seat, the valve may still prevent flow at the open position. If no flow is determined at the open position, the processor may be configured to move the open position further from the closed position. Accordingly, the fault may be rectified by the eTRV. If there is still no flow at the maximum opening possible with the motor, a user may be informed with a fault message. A flow being determined at the closed position is indicative of a leaking valve. Such a fault may not be rectified by the eTRV, but a user may be informed with the fault message.

The processor may be configured to move, with the motor, the valve operating pin to a heating position after the no flow position has been assigned. In this way, the radiator may be arranged to provide heat to the room as intended immediately after the no flow position is determined.

The step of determining, with the temperature sensor, an increase in temperature of the radiator valve body may comprise measuring a predetermined step increase in temperature of the radiator valve body. The step increase in temperature may be determined over a predetermined time period. In this way, the absolute temperature of the radiator valve body is not relevant. The processor determining a step increase in temperature, optionally over a predetermined time period, may be observed during flow of relatively warm heating fluid through the radiator valve body regardless of the current temperature of the radiator valve body. The step increase in temperature may be 5°C, 10°C or any other desired temperature. The step increase in temperature may be set at a value that is large enough such that natural changes in ambient temperature are not determined to be a flow through the radiator valve body. The predetermined time period may be 15 seconds, 30 seconds, 45 seconds, one minute, two minutes, or any other desired time period. The predetermined time period may be set at a value that is small enough such that natural changes in ambient temperature are not determined to be a flow through the radiator valve body.

According to a second aspect, there is provided a method of determining a no flow position of a radiator valve body, the method comprising: positioning a valve operating pin of the radiator valve body in an open position; determining an increase in temperature of the radiator valve body; determining a full open delay time, wherein the full open delay time is equal to or longer than a length of time between positioning the valve operating pin in the open position and measuring an increase in temperature of the radiator valve body; positioning the valve operating pin in a first intermediate position between the open position and a closed position; determining, after waiting the full open delay time, that no increase in temperature of the radiator valve body occurred; and assigning the first intermediate position as a no flow position.

In this way, the position of the valve at which no flow through the valve is allowed may be determined,

The method may include any or each of the additional processing steps disclosed with reference to the processor of the first aspect. In other words, the processor of the first aspect may be arranged to carry out the method of the second aspect. The method may be carried out by the eTRV of the first aspect.

According to a third aspect, there is provided a radiator valve comprising the eTRV of the first aspect and a radiator valve body. The housing of the eTRV may be attached to the radiator valve body. Alternatively, the eTRV and radiator valve body may be provided separately and may be configured to be assembled by an end user during installation or modification of a heating system.

### Brief Description of the Drawings

The disclosure will be further described with reference to examples identified in the accompanying figures in which:
Figure 1 is a schematic side view of a radiator valve body and an eTRV;
Figure 2 is a further schematic side view of the radiator valve body and the eTRV shown in

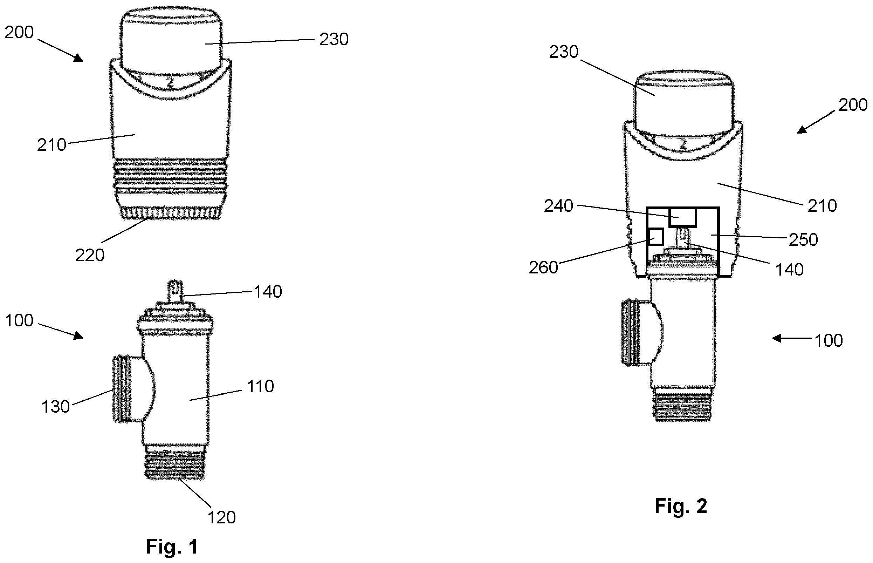

Figure 1, wherein the eTRV is installed on the radiator valve body and a section of the housing of the eTRV is removed to show internal components;

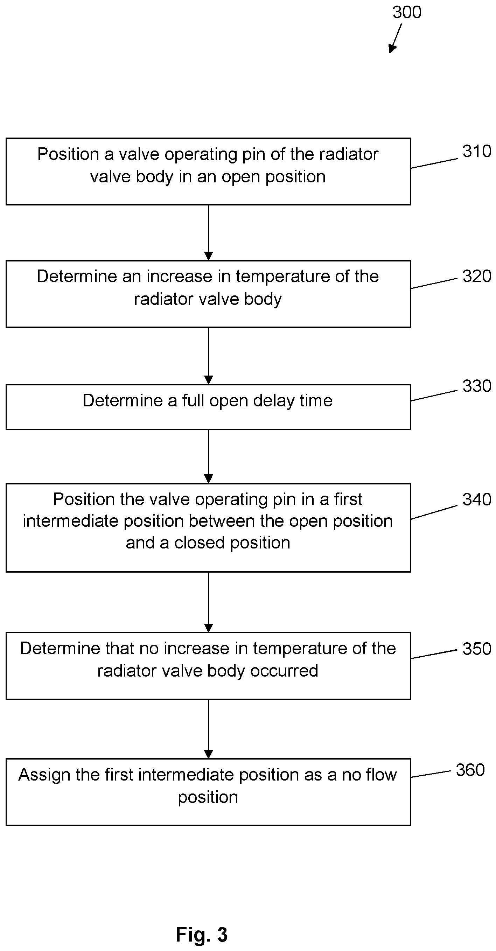

Figure 3 is a method diagram showing the steps of a method of determining a no flow position of a radiator valve body;

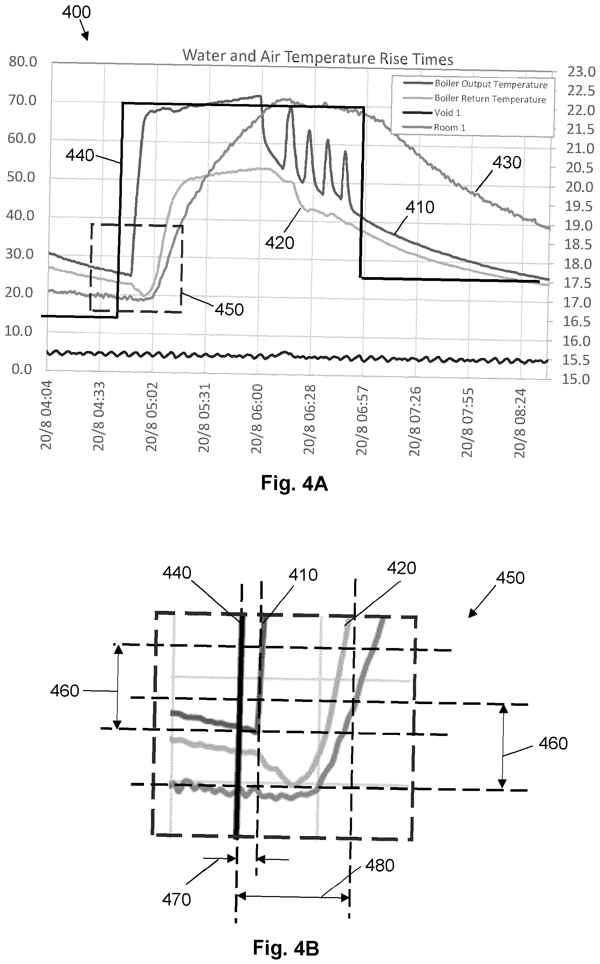

Figure 4A is a graph showing output and return temperature over time during a heating cycle; and
Figure 4B is an enlarged view of a portion of the graph shown in Figure 4A.

Throughout the drawings, identical reference characters and descriptions indicate similar, but not necessarily identical, elements. While the aspects described herein are susceptible to various modifications and alternative forms, specific examples have been shown in the drawings and will be described in detail herein. However, the scope of the present invention is not intended to be limited to the particular forms disclosed. Rather, the present disclosure covers all modifications, equivalents, and alternatives falling within the scope of the appended claims.

### Detailed Description

The following description presents exemplary embodiments and, together with the drawings, serves to explain principles of the disclosure. However, the scope of the invention is not intended to be limited to the precise details of the examples, since variations will be apparent to a skilled person and are deemed also to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to examples and embodiments with particular combinations of features, however, it is envisaged that further combinations and cross-combinations of compatible features between examples and embodiments will be possible. Indeed, isolated features may function independently as an invention from other features and not necessarily require implementation as a complete combination.

Figure 1 is a schematic side view of a radiator valve body 100 and an eTRV 200. The radiator valve body 100 includes a housing 110 defining a passage therethrough. The housing 110 of the radiator valve body 100 includes an inlet opening 120 and an outlet opening 130. The passage defined by the housing 110 passes from the inlet opening 120 to the outlet opening 130. The inlet opening 120 is configured to be attached to a supply conduit (not shown) of a heating system. The outlet opening 130 is configured to be attached to a radiator (not shown).

The heating system is arranged to provide hot water, or other heating fluid, to the radiator valve body 100 via the supply conduit. The hot water passes through the radiator valve body 110, from the inlet opening 120 to the outlet opening 130, and into the radiator to heat a room in which the radiator is positioned.

In some arrangements, wherein the radiator valve body 100 is positioned on an outlet side of a radiator, the water will flow from the radiator, though the passage defined by the housing 110 of the radiator valve body 100 from the outlet opening 130 to the inlet opening 120, and into a return conduit of the heating system.

The radiator valve body 100 also includes an operating pin 140. The operating pin 140 is connected to a valve (not shown) within the radiator valve body 100 that can be operated by actuating the operating pin 140 to limit or increase flow through the passage defined by the radiator valve body 100. For example, pushing the operating pin 140 further into the housing 110 may cause the valve to reduce a cross-sectional area of the passage to limit flow therethrough. Fully depressing the operating pin 140 may cause the valve to prevent flow through the radiator valve body 100. In some examples, the operating pin 140 may be screwed into the housing 110.

The eTRV 200 is configured to be attached to the radiator valve body 100 and actuate the operating pin 140, as discussed with reference to Figure 2. The eTRV 200 includes a housing 210 defining an opening 210 into which an upper portion of the radiator valve body 100 is configured to be received, such that the operating pin 140 of the radiator valve body 100 is covered by the housing 210 of the eTRV 200.

The eTRV 200 also includes a dial 230 operable by a user to set a temperature to which the room should be heated. Typically, the dial 230 indicates a number of relative positions between 0 and 5, OFF and MAX, etc., at which the user may choose to set the dial 230. The number of relative positions may correspond to a temperature. For example, '1' may correspond to 10°C, '2' may correspond to 15°C, '3' may correspond to 20°C, '4' may correspond to 25°C, and '5' may correspond to 30°C. In some examples, the dial 230 may indicate numerical values for temperature, such as 19°C, 20°C, etc., that the user may choose. In some further examples, the eTRV 200 may not include a dial 230 and the temperature may be set electronically, via an app on a user device or otherwise.

The eTRV 200 may include a room temperature sensor and a motor. The room temperature sensor may be arranged to measure an ambient temperature of the room in which the radiator is positioned. The motor may be used to move a plunger to depress or extract the operating pin 140 of the radiator valve body 100 to reduce or increase flow respectively. If there is a difference between the measured temperature and the temperature set with the dial 230 or otherwise, the motor may be actuated to move the operating pin 140. For example, if the desired temperature set with the dial is greater than the measured room temperature, the motor may be used to extract the operating pin 140 to increase flow through the radiator. As a further example, if the desired temperature set with the dial is equal to or lower than the measured room temperature, the motor may be used to depress the operating pin 140 to reduce or prevent flow through the radiator. In this way, the temperature of the room may be held at or close to the desired temperature set by the user.

Figure 2 is a further schematic side view of the radiator valve body 100 and the eTRV 200 shown in Figure 1, wherein the eTRV 200 is installed on the radiator valve body 100 and a section of the housing 210 of the eTRV 200 is removed to show internal components, for clarity purposes.

The eTRV 200 is arranged on the radiator valve body 100 such that a plunger 240 of the eTRV is adjacent to the valve operating pin 140 of the radiator valve body 100. The plunger 240 is configured to, in use, press down upon the valve operating pin 140 or retract away from the valve operating pin 140. When the eTRV 200 determines that an ambient room temperature is at or above a desired temperature set by the user with the dial 230, the eTRV 200 may operate to push the plunger 240 down onto the valve operating pin 140, which in turn is depressed to restrict a flow of heating fluid through the radiator valve body 100. When the eTRV 200 determines that an ambient room temperature is below a desired temperature set by the user with the dial 230, the eTRV 200 may operate to retract the plunger 240 away from the valve operating pin 140, which is pushed out of the body by an associated spring, to allow an increased flow of heating fluid through the radiator valve body 100.

The housing 210 of the eTRV 200 defines a cavity 250 adjacent to the valve operating pin 140 and a top region of the radiator valve body 100. As relatively warm heating fluid flows through the radiator valve body 100, a temperature of the radiator valve body 100 increases. The radiator valve body 100 acts to heat air contained within the cavity 250 adjacent to the valve operating pin 140. The eTRV includes a temperature sensor 260 arranged to measure a temperature of the air within the cavity 250. Accordingly, the temperature sensor 260 is able to determine when a temperature of the radiator valve body 100 increases, which indicates a flow of relatively warm heating fluid through the radiator valve body.

In some alternative examples, the temperature sensor 260 may directly measure a temperature of the radiator valve body 100, for example by being in physical contact with the radiator valve body 100 or in any other known manner.

Figure 3 is a method diagram showing the steps of a method 300 of determining a no flow position of a radiator valve body, such as the radiator valve body shown in Figures 1 and 2.

A first step of the method 300 is to position 310 a valve operating pin of the radiator valve body in an open position. The open position may be determined by moving the valve operating pin a predetermined distance, based on an assumed stroke length, from the closed position. The closed position may be determined by closing the valve to a maximum possible extent, for example closing the valve until a motor closing the valve stalls. In the open position, the valve allows heating fluid to pass therethrough.

A second step of the method 300 is to determine 320 an increase in temperature of the radiator valve body. As relatively warm heating fluid passes through the radiator valve body, the temperature of the radiator valve body will increase. The determined increased may be a step change in temperature over a predetermined time period, so that changes in ambient temperature are ignored.

The next step is to determine 330 a full open delay time. To do so, a length of time between opening the valve and determining an increase in temperature of the radiator valve body is measured. The full open delay time is equal to or longer than the length of time between moving the valve operating pin to the open position and measuring the increase in temperature of the radiator valve body. Accordingly, after the valve is opened from the closed position, if flow is allowed through the radiator valve body it is expected to be determined by the end of the full open delay time. If no flow is determined following the conclusion of the full open delay time, it may be determined that the radiator valve body is preventing flow therethrough.

Following the determination 330 of the full open delay time, the next step of the method 300 is to position 340 the valve operating pin in a first intermediate position between the open position and a closed position.

The next step is to determine 350 that no increase in temperature of the radiator valve body occurred. Accordingly, the method 300 may determine that the valve operating pin need only be moved to the first intermediate position to prevent flow through the radiator valve body.

A final step of the method 300 is to assign 360 the intermediate position as a no flow position. There would be no need to move the valve operating pin to the closed position in use. Therefore, undesirable compression and damage to the valve seat will be reduced, thereby prolonging the life of the radiator valve body.

The location of the no flow position may be fine-tuned with an iterative process as disclosed herein.

Figure 4A is a graph 400 showing boiler output 410 and return 420 temperature over time during a heating cycle. The graph 400 also shows room temperature 430, and a level of a heat demand signal 440 over time. As shown in the graph, prior to the start of the heating cycle, the room temperature 430 is approximately 17°C and the heat demand signal 440 is low. The heat demand signal 440 is raised to a relatively high level, which initiates the heating cycle and causes the boiler to begin heating and pumping the heating fluid.

The boiler output temperature 410 raises from approximately 26°C to approximately 70°C over a short period of time. The boiler return temperature 420 follows this rise in temperature of the boiler output temperature 410, although the rise in temperature is after the rise in boiler output temperature 410 and the boiler return temperature 420 reaches a lower maximum temperature of approximately 53°C. These differences are understood to be a result of the heating fluid passing through a radiator, which takes some time, and wherein heat is emitted to lower the temperature of the heating fluid.

Once the boiler output temperature 410 reaches a level of the heat demand signal 440, the boiler output temperature 410 plateaus. In this time, the room temperature 430 has reached the desired temperature of approximately 22°C. The boiler then operates to heat the heating fluid intermittently to maintain the room temperature 430 at the desired level. The heat demand signal 440 then falls to a relatively lower level of approximately 17.5°C, below the current room temperature 430, so the boiler ceases heating and the room temperature 430 is allowed to fall.

Figure 4B is an enlarged view of a portion of the graph 400 shown in Figure 4A. In particular, Figure 4B shows an enlarged view of the portion of the graph 400 at the time the level of the heat demand signal 440 is increased.

As discussed with reference to Figure 3, the eTRV is arranged to carry out a method in which the first step is to position a valve operating pin of the radiator valve body in an open position.

This positioning of the valve operating pin occurs simultaneously with the increase in level of the heat demand signal 440.

As the relatively warm heating fluid passes through the radiator valve body, the temperature of the radiator valve body increases. The eTRV is configured to determine a step increase in temperature 460.

The open delay time is set at, or exceeding, the time taken for this step increase in temperature 460 to occur. The time taken for the step increase in temperature 460 to occur is dependent on how the eTRV is installed on the radiator. In some examples, the eTRV is installed on an inlet side of the radiator. In other examples, the eTRV is installed on an outlet side of the radiator. In the example shown in Figures 4A and 4B, for simplicity, the boiler outlet temperature 410 may be considered to be the radiator inlet temperature, and the boiler return temperature 420 may be considered to be the radiator outlet temperature.

As shown in Figure 4B, the time taken 470 for the step increase in temperature 460 to be seen in the boiler outlet temperature 410 is much shorter than the time taken 480 for the step increase in temperature 460 to be seen in the boiler return temperature 420. The increase in time is understood to be caused by a combination of the time taken for the heating fluid to pass through the radiator, and the heat loss from the radiator. Determining the open delay time in the manner discussed with reference to Figure 3 means that the particular arrangement of the system, with the eTRV on the radiator inlet or the radiator outlet, is not relevant.

## Claims

1. An electronic thermostatic radiator valve, eTRV, (200) comprising:
a housing (210) configured to be attachable to a radiator valve body (100) of a radiator;
a temperature sensor (260) arranged and configured to measure a temperature of the radiator valve body (100);
a motor connected to a valve operating pin (140) of the radiator valve body (100) and configured to actuate the valve operating pin (140) between a closed position and an open position;
a processor in communication with the temperature sensor (260) and the motor; and
a power source configured to provide power to the temperature sensor (260), the motor and the processor;
wherein the processor is configured to:
move, with the motor, the valve operating pin (140) to the open position;
determine, with the temperature sensor (260), an increase in temperature of the radiator valve body (100);
determine a full open delay time, wherein the full open delay time is equal to or longer than a length of time between moving the valve operating pin (140) to the open position and measuring the increase in temperature of the radiator valve body (100);
move, with the motor, the valve operating pin (140) to a first intermediate position between the open position and the closed position;
determine, after waiting the full open delay time and with the temperature sensor (260), that no increase in temperature of the radiator valve body (100) occurred; and
assign the first intermediate position as a no flow position.

2. The eTRV (200) of claim 1, wherein the housing (210) is configured to define a cavity (250) adjacent to and in fluid communication with the radiator valve body (100), and the temperature sensor (260) is configured to measure an air temperature within the cavity (250).

3. The eTRV (200) of claim 1, wherein the temperature sensor (260) is configured to directly measure the temperature of the radiator valve body (100).

4. The eTRV (200) of any preceding claim, wherein the processor is further configured to:
move, with the motor, the valve operating pin (140) to a second intermediate position, wherein the second intermediate position is between the open position and the first intermediate position; and
determine, after waiting the full open delay time and with the temperature sensor (260), an increase in temperature of the radiator valve body (100) occurred.

5. The eTRV (200) of claim 4, wherein the processor is configured to move the valve operating pin (140) to the first intermediate position prior to moving the valve operating pin (140) to the second intermediate position.

6. The eTRV (200) of claim 5, wherein, prior to moving the valve operating pin (140) to the first intermediate position, the processor is configured to:
iteratively move the valve operating pin (140) to further intermediate positions between the closed position and the first intermediate position; and
determine, after waiting the full open delay time at each of the further intermediate positions and with the temperature sensor (260), that no increase in temperature of the radiator valve body (100) occurred;
wherein the processor is configured to iteratively move the valve operating pin (140) to the further intermediate positions in an order from the closed position towards the first intermediate position.

7. The eTRV (200) of claim 4, wherein the processor is configured to move the valve operating pin (140) to the second intermediate position prior to moving the valve operating pin (140) to the first intermediate position.

8. The eTRV (200) of claim 7, wherein, prior to moving the valve operating pin (140) to the second intermediate position, the processor is configured to:
iteratively move the valve operating pin (140) to further intermediate positions between the open position and the second intermediate position; and
determine, after waiting the full open delay time at each of the further intermediate positions and with the temperature sensor (260), that an increase in temperature of the radiator valve body (100) occurred;
wherein the processor is configured to iteratively move the valve operating pin (140) to the further intermediate positions in an order from the open position towards the second intermediate position.

9. The eTRV (200) of any preceding claim, further comprising a transmitter operable, in use, to send a heat demand signal to a heat source associated with the radiator, wherein:
the processor is in communication with the transmitter;
the power source is configured to provide power to the transmitter; and
the processor is configured to move, with the motor, the valve operating pin (140) to the open position when the heat demand signal is sent to the heat source.

10. The eTRV (200) of claim 9, wherein the processor is configured to determine a fault and send, with the transmitter, a fault message to a user device;
wherein the fault message indicates the determination of at least one of:
no increase in temperature of the radiator valve body (100) occurring after waiting the full open delay time with the valve operating pin (140) in the open position; and
an increase in temperature of the radiator valve body (100) occurring with the valve operating pin (140) in the closed position.

11. The eTRV (200) of any preceding claim, wherein the processor is configured to move, with the motor, the valve operating pin (140) to a heating position after the no flow position has been assigned.

12. The eTRV (200) of any preceding claim, wherein the step of determining, with the temperature sensor (260), an increase in temperature of the radiator valve body (100) comprises measuring a predetermined step increase in temperature of the radiator valve body (100).

13. The eTRV (200) of any preceding claim, wherein the processor is configured to:
determine the closed position by moving, with the motor, the valve operating pin (140) towards the closed position until the motor stalls; and
set the open position at a predetermined distance from the closed position, wherein the predetermined distance is based on an assumed stroke length of the valve operating pin (140).

14. A method (300) of determining a no flow position of a radiator valve body (100), the method comprising:
positioning (310) a valve operating pin (140) of the radiator valve body (100) in an open position;
determining (320) an increase in temperature of the radiator valve body (100);
determining (330) a full open delay time, wherein the full open delay time is equal to or longer than a length of time between positioning the valve operating pin (140) in the open position and measuring an increase in temperature of the radiator valve body (100);
positioning (340) the valve operating pin (140) in a first intermediate position between the open position and a closed position;
determining (350), after waiting the full open delay time, that no increase in temperature of the radiator valve body (100) occurred; and
assigning (360) the first intermediate position as a no flow position.

15. A radiator valve comprising the eTRV (200) of any of claims 1 to 13 and a radiator valve body (100).
